# EUROPEAN PATENT SPECIFICATION

(11) **EP 3 528 442 B1**
(45) Date of publication and mention of the grant of the patent: **30.12.2020**
(21) Application number: 17860307.2
(22) Date of filing: 28.04.2017
(51) Int. Cl.: H04L 12/911, H04J 3/06, H04J 3/16

(54) **METHOD, DEVICE, COMPUTER STORAGE MEDIUM FOR MAPPING OPTICAL CHANNEL DATA UNIT FRAMES**
VERFAHREN, VORRICHTUNG, COMPUTERSPEICHERMEDIUM ZUR ABBILDUNG OPTISCHER KANALDATENEINHEITSRAHMEN
PROCÉDÉ, DISPOSITIF, SUPPORT DE STOCKAGE INFORMATIQUE PERMETTANT DE MAPPER DES TRAMES D'UNITÉ DE DONNÉES DE CANAL OPTIQUE

(30) Priority: 11.10.2016 CN 201610890091
(43) Date of publication of application: 21.08.2019
(73) Proprietor: Sanechips Technology Co., Ltd., Shenzhen, Guangdong 518055 (CN)
(72) Inventor: LIU, Qinkui, Shenzhen Guangdong 518055 (CN); WU, Bei, Shenzhen Guangdong 518055 (CN); WANG, Youbao, Shenzhen Guangdong 518055 (CN)
(74) Representative: Aipex B.V.
(86) International application number: PCT/CN2017/082615
(87) International publication number: WO 2018/068497

(56) References cited:
- EP-A1- 2 843 966
- CN-A- 102 316 391
- CN-A- 103 384 178
- CN-A- 103 561 359
- US-A1- 2016 056 914
- STEVE GORSHE PMC-SIERRA ET AL: "Recommendations for GMP Justification Controls in multiplexing ODU clients into ODUCn;WD11-33", ITU-T DRAFT ; STUDY PERIOD 2013-2016, INTERNATIONAL TELECOMMUNICATION UNION, GENEVA ; CH, vol. 11/15, 18 August 2014 (2014-08-18), pages 1-3, XP044078638, [retrieved on 2014-08-18]

## Description

### Technical Field

The present invention relates to the field of Optical Transport Network (OTN), in particular to a mapping method and apparatus of Optical Channel Data Unit Cn (ODUCn), and a computer storage medium.

### Background

OTN is a transmission network based on a Wavelength Division Multiplexing (WDM) technology, which organizes a network in an optical layer. Signal transmission of OTN requires a mapping processing of customer signals, from a low-order Optical channel Data Unit (ODU) to a high-order ODU, and an Optical Channel Transport Unit (OTU) is finally formed to be transmitted.

With continuous improvement of mobile intelligent terminals and the Internet of Things on coverage requirements of 4G and 5G networks, a demand for bandwidth in a broadband access, a high definition video and a bearer network market continues to grow rapidly. And, with a rise of cloud computing, cloud storage and big data, data exchange and interconnection between cloud and cloud, cloud and mobile intelligent terminals require more and more bandwidths for a bearer network. Beyond 100G (B100G) technologies has become a solution to a demand for bandwidth growth. For bandwidths above 100G, whether 400G or 1T, it is obvious that a traditional ODUk (k=2, 3, or 4) cannot provide enough spectrum width to directly carry B100G services. Therefore, the International Telecommunication Union (ITU) has formulated an ODUCn mapping for B100G services. The ODUCn mapping is the latest mapping protocol proposed by the ITU. However, there is no corresponding mapping implementation method and circuit apparatus. The ODUCn mapping can only be applied according to existing ODUk mapping implementation solutions.

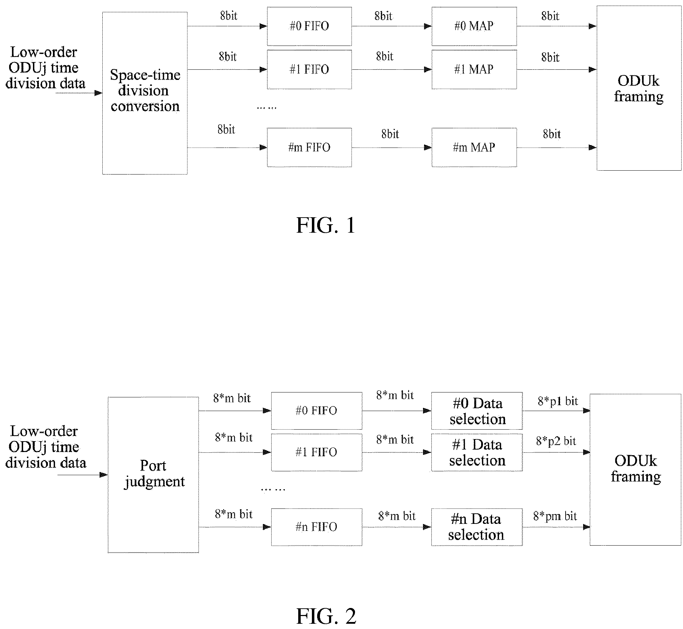

FIG. 1 is an existing ODUk mapping implementation solution. In FIG. 1, after low-order ODUj time division data has completed a time-space division conversion, the converted low-order ODUj space division data are divided according to different time slots, respectively entered into different First in First out (FIFO) caches, and then the cached data is mapped respectively, and finally ODUk data frames are formed. Each time slot needs an FIFO cache corresponding to a time slot, a processing bit width is 8 bits, and the number of caches is m (m is the total number of time slots). In addition, a set of time-space division conversion circuits with complex structures are needed in the implementation process of the ODUk mapping.

Assuming that the solution shown in FIG. 1 is adopted to realize an ODUCn mapping, since each ODUC1 has 20 5G time slots and each time slot has 16 bytes, the number of FIFO caches required by ODUCn is 20^{∗}n and a processing bit width is 20^{∗}n^{∗}16 bytes. It can be seen that, when the value of n is large, the number of FIFO caches and the value of processing bit width required to realize the ODUCn mapping will become large, resulting in a large design scale. Therefore, it is unacceptable to adopt the solution shown in FIG. 1 to realize the ODUCn mapping.

FIG. 2 is another existing ODUk mapping implementation solution, which divides low-order ODUj time division data according to different port numbers. In FIG. 2, firstly, low-order ODUj time division data are respectively written into corresponding n (n is the total number of ports) FIFO caches according to different port numbers through a port judging module, and a processing bit width is 8^{∗}m (m is the number of time slots processed in each clock). Then, time slot data required by each port is selected from n 8^{∗}mbit data: p1^{∗}8bit, p2^{∗}8bit, ..., pm^{∗}8bit; finally, ODUk data frames are formed.

Assuming that the solution shown in FIG. 2 is adopted to realize the ODUCn mapping, since each ODUC1 has 20 5G time slots, each time slot has 16 bytes, and each ODUC1 can carry 10 low-order ODUj services, and the number of FIFO caches required by ODUCn is 10^{∗}n. At this time, time slot data required by each port needs to be selected from 10^{∗}n 16^{∗}m bytes: p1^{∗}16 bytes, p2^{∗}16 bytes, ..., pm^{∗}16 bytes. It can be seen that, when the value of n is large, the number of FIFO caches and the number of data selectors required to realize the ODUCn mapping will become large, resulting in large consumption of cache resources and data selector resources, large power consumption and high implementation cost. And when the number of service ports becomes smaller, most of the caches will be idle, causing a waste of resources. Therefore, it is unacceptable to implement the ODUCn mapping using the solution shown in FIG. 2.

According to the existing ODUk mapping implementation solutions in the prior art, an effective solution has not yet been proposed to solve the problem of logic scale, implementation complexity and universality of the ODUCn mapping method.

EP 2843966 A1 discloses a Generic Mapping Procedure (GMP) mapping method for an Optical channel Data Unit (ODU).

STEVE GORSHE PMC-SIERRA ET AL: "Recommendations for GMP Justification Controls in multiplexing ODU clients into ODUCn; WD11-33", ITU-T DRAFT; STUDY PERIOD 2013-2016, INTERNATIONAL TELECOMUUNICATION UNION, GEVEVA; CH, vol. 11/15, 18 August 2014, pages 1-3, XP044078638, discloses: GMP is planned to the used for Justification Control in multiplexing ODU clients into ODUCn.

### Summary

In view of this, the embodiments of the present invention are expected to provide a mapping method according to claim 1 and apparatus of ODUCn according to claim 5, and a computer storage medium according to claim 9, so as to at least solve the problem of logic scale, implementation complexity, and universality existing in applying a mapping method of ODUCn by adopting an ODUk mapping implementation solution.

To achieve the above purpose, the technical solution of the embodiments of the present invention is realized as follows.

Also provided is a mapping method of ODUCn, including: caching low-order ODUj data into n partition memories according to a port time slot configured for each low-order ODUj data; generating a value Cm of the number of m-bit data entities and a value ∑Cnd, which is a difference between Cn and (m/n x Cm), of the number of accumulated remaining bits which cannot form the m-bit data entities according to a rate of low-order ODUj data stream, and encoding the values of Cm and ∑Cnd; generating a read signal of cached data by utilizing a modulation algorithm and according to the value of Cm, reading low-order ODUj data cached in the partition memories, and selecting required time slot data from the read data; and packaging the selected time slot data and the encoded values of Cm and ∑Cnd into n ODUC1 frames according to a generated ODUC control signal.

In the above solution, the method further includes: partitioning the partition memories according to different port time slots corresponding to each low-order ODUj; and configuring, by the partition memories, dynamically partition sizes occupied by various ports for each low-order ODUj; writing, by the n partition memories, simultaneously the same data in a writing direction and reading out x port data in a reading direction, wherein x is less than or equal to n.

In the above solution, the generating the read signal of cached data by utilizing the modulation algorithm and according to the value of Cm, reading low-order ODUj data cached in the partition memories, includes: generating effective data gap signals of various port time slots from the value of Cm according to an integral-differential sigma-delta rule, and converting the effective data gap signals into cached read signals; reading the low-order ODUj data cached in the partition memories according to that the cached read signals enable the cached data to be read.

In the above solution, the selecting required time slot data from the read data, includes: selecting the required time slot data according to a port of each time slot in the read cached low-order ODUj data.

Also provided is a mapping apparatus of ODUCn, which includes a caching module, a Cm and ∑Cnd value generation module, an encoding module, a cache read signal generation module, a data selection module, an ODUC control signal generation module and an ODUC framing module.

The caching module is configured to cache low-order ODUj data into n partition memories according to a port time slot configured for each low-order ODUj data.

The Cm and ∑Cnd value generation module is configured to generate values of Cm and ∑Cnd according to a rate of low-order ODUj data stream.

The encoding module is configured to encode the values of Cm and ∑Cnd.

The cache read signal generation module is configured to generate a read signal of cached data by utilizing a modulation algorithm and according to the value of Cm, and read low-order ODUj data cached in the partition memories.

The data selection module is configured to select required time slot data from the read data.

The ODUC control signal generation module is configured to generate an ODUC control signal.

The ODUC framing module is configured to package the selected time slot data and the encoded values of Cm and ∑Cnd into n ODUC1 frames according to the generated ODUC control signal.

In the above solution, the caching module is specifically configured as follows: the partition memories are partitioned according to different port time slots corresponding to each low-order ODUj; the partition memories dynamically configure partition sizes occupied by various ports for each low-order ODUj; and the n partition memories simultaneously write the same data in a writing direction and read out x port data in a reading direction, wherein x is less than or equal to n.

In the above solution, the cache read signal generation module is specifically configured to: generate effective data gap signals of various port time slots from the value of Cm according to a sigma-delta rule, and convert the effective data gap signals into cached read signals; read the low-order ODUj data cached in the partition memories according to that the cached read signals enable the cached data to be read.

In the above solution, the data selection module is specifically configured to: select the required time slot data according to a port of each time slot in the read cached low-order ODUj data.

The caching module, the Cm and ∑Cnd value generation module, the encoding module, the cache read signal generation module, the data selection module, the ODUC control signal generation module, and the ODUC framing module may be implemented with a Central Processing Unit (CPU), a Digital Signal Processor (DSP), or a Field-Programmable Gate Array (FPGA) when implementing the processing.

The embodiment of the present invention further provides a computer storage medium, storing computer-executable instructions, and the computer-executable instructions are configured to execute the mapping method of ODUCn.

According to the mapping solution of ODUCn provided by the embodiment of the present invention, the low-order ODUj data are cached into n partition memories according to the port time slot configured for each low-order ODUj data; values of Cm and ∑Cnd are generated according to the rate of the low-order ODUj data stream, and the values of Cm and ∑Cnd are encoded; the read signal of cached data is generated by utilizing a modulation algorithm and according to the value of Cm, low-order ODUj data cached in the partition memories is read, and required time slot data is selected from the read data; the selected time slot data and the encoded values of Cm and ∑Cnd are packaged into n ODUC1 frames according to the generated ODUC control signal. In this way, mapping from low-order ODUj service data to ODUCn is realized, and the implementation process of the mapping method is simple and has great advantages in logic scale, implementation complexity, and universality. Therefore, the mapping method plays an important role in ensuring reliability of high-rate communication and is helpful for improving commercial application of high-rate optical fiber communication.

### Brief Description of Drawings

FIG. 1 is a schematic diagram of an existing ODUk mapping implementation solution.
FIG. 2 is a schematic diagram of another existing ODUk mapping implementation solution.
FIG. 3 is an implementation flow diagram of the mapping method of ODUCn according to an embodiment of the present invention.
FIG. 4 is a specific implementation flow diagram of the mapping method of ODUCn according to an embodiment of the present invention.
FIG. 5 is a structural diagram of composition of a mapping apparatus of ODUCn according to an embodiment of the present invention.

### Detailed Description

In order to understand the features and technical contents of the embodiments of the present invention in more detail, the implementation of the embodiments of the present invention will be described in detail below with reference to the attached drawings, which are for reference only and are not intended to limit the present invention.

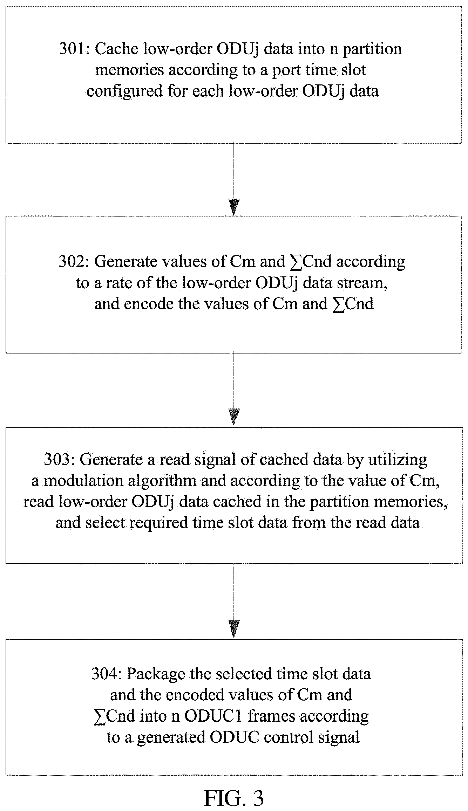

As shown in FIG. 3, the implementation flow of the mapping method of ODUCn in the embodiment of the present invention includes the following steps 301-304.

Step 301: it is to cache low-order ODUj data into n partition memories according to a port time slot configured for each low-order ODUj data, wherein n is a positive integer.

Here, the partition memories are partitioned according to different port time slots corresponding to each low-order ODUj; and the partition memories configure dynamically partition sizes occupied by various ports for each low-order ODUj.

Specifically, in the embodiment, the data of the low-order ODUj service is stored in a shared cache manner; each low-order ODUj is allocated a cache space with a corresponding size according to a bandwidth size of each low-order ODUj service data, that is, a partition size occupied by a port of each low-order ODUj. When the bandwidth of the low-order ODUj service data is changed, the partition size occupied by the port of each low-order ODUj may be dynamically adjusted without causing damage to the low-order ODUj service data.

The partition memories may use a Random Access Memory (RAM) to store data of the low-order ODUj service, or may use any other memory to store data of the low-order ODUj service. The present invention is not specifically limited herein.

Here, since mapping from low-order ODUj service data to ODUCn is to be realized, according to a value of n of ODUCn, n partition memories need to be selected to store the data of the low-order ODUj service; the n partition memories simultaneously write the same data in a writing direction and read out x port data in a reading direction, wherein x is less than or equal to n.

Step 302: it is to generate values of Cm and ∑Cnd according to a rate of the low-order ODUj data stream, and encode the values of Cm and ∑Cnd.

Here, the step of generating the values of Cm and ∑Cnd according to the rate of the low-order ODUj data stream specifically includes: statistically obtaining a value of Cn of the low-order ODUj data in a multi-frame period according to a received ODUC multi-frame frame header control signal and the rate of the low-order ODUj data stream, and converting the value of Cn into the values of Cm and ∑Cnd after internal filtering.

Here, the value of Cn of the low-order ODUj data obtained statistically may be internally filtered by an existing filtering method, which will not be repeated here. The values of Cm and ∑Cnd are encoded according to a protocol, and specifically, the values of Cm and ∑Cnd may be encoded using existing encoding methods, which will not be repeated here.

Step 303: it is to generate a read signal of cached data by utilizing a modulation algorithm and according to the value of Cm, read low-order ODUj data cached in the partition memories, and select required time slot data from the read data.

Here, the step of generating the read signal of cached data by utilizing the modulation algorithm and according to the value of Cm, reading low-order ODUj data cached in the partition memories specifically includes: generating effective data gap signals of various port time slots from the value of Cm according to a sigma-delta rule, and converting the effective data gap signals into cached read signals; reading the low-order ODUj data cached in the partition memories according to that the cached read signals enable the cached data to be read.

Here, the step of selecting required time slot data from the read data specifically includes: selecting the required time slot data according to a port of each time slot in the read cached low-order ODUj data.

Step 304: it is to package the selected time slot data and the encoded values of Cm and ∑Cnd into n ODUC1 frames according to a generated ODUC control signal.

Here, under a system clock, a clock coefficient of each ODUC is configured, and a rate of ODUC is generated. At this rate of ODUC, frame structures of n ODUC are generated, and a frame row and column counter of ODUC is output. According to a control signal generated by the frame row and column counter of ODUC, the selected time slot data and the encoded values of Cm and ∑Cnd are controlled to be packaged into n ODUC1 frames.

The method of the present invention will be described in detail in combination with a specific application scenario below.

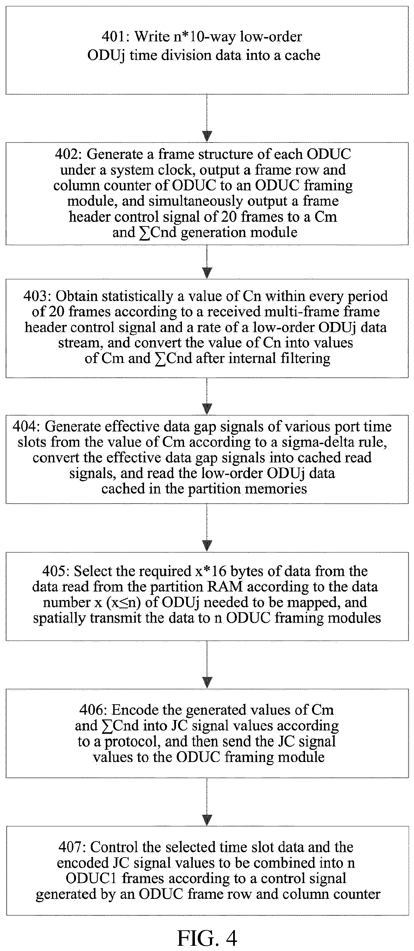

With reference to FIG. 4, the implementation of the technical solution of mapping at most n^{∗}10-way low-order ODUj time division data to space division ODUCn (n=1, 2, 3, ...) will be described in further detail, wherein the minimum rate of low-order ODUj service data is 5Gbit/s and the maximum rate is n^{∗}100 Gbit/s.

Step 401: it is to write n^{∗}10-way low-order ODUj time division data into a cache.

Here, the cache may be implemented by a partition RAM, and n^{∗}10-way low-order ODUj requires n partition RAMs to cache data. Various port data of time division are simultaneously written into addresses corresponding to n partition RAMs according to port numbers of low-order ODUj of time division input. Since n partition RAMs require the same data to be written at the same time, only one set of write addressing circuit is required. In addition, since each partition RAM is partitioned according to a 5G time slot of each ODUC, i.e., one 5G time slot corresponds to one partition, each partition RAM has n^{∗}20 partitions. The partition numbers of these n^{∗}20 partitions are 0∼n^{∗}20-1, and each partition occupies m depths, then an address corresponding to partition number 0 is 0∼m-1; an address corresponding to partition number 1 is m∼2^{∗}m-1 ...... and so on. Here, a size of m is determined by jitter of a time division data bus.

It should be noted that the higher the rate of ODUj service data is, the more occupied 5G time slots is and the more the number of partitions is.

Here, the number of 5G time slots occupied by each ODUj is known and may be indicated by a configuration of a CPU. Each port corresponds to a configuration named oduj_type; and, the CPU also configures n^{∗}20 registers and names the registers oduj_slot_num, wherein each register is filled with a partition number occupied by each ODUj, and oduj_slot_num and oduj_type are used in co-operation. For example, port numbers of n^{∗}10-way ODUj are 0∼n^{∗}10-1. Assuming that ODUj of port 0 occupies 5 time slots, ODUj of port 1 occupies 12 time slots....... Then, oduj_type of port 0 is 5, and partition numbers configured in its corresponding 0-4 oduj_slot_num registers are occupied by port 0; while oduj_type of port 1 is 12, partition numbers configured in its corresponding 5-16 oduj_slot_num registers are occupied by port 1; and so on.

Here, when a service is switched, only configurations of oduj_type and oduj_slot_num need to be changed. In this way, after configuration is switched, the original service may be maintained without errors due to configuration modification of the switched service.

Step 402: under a system clock, it is to configure a clock coefficient of each ODUC, generate a rate of ODUC, generate a frame structure of each ODUC at this rate, output a frame row and column counter of ODUC to a ODUC framing module, and simultaneously output a frame header control signal of 20 frames to a Cm and ∑Cnd generation module.

Here, since the time slot of each ODUC is 5G time slot and each time slot is 16 bytes, an ODUC processing bit width of n-way space division output may be set to 16 bytes, and the system clock needs to exceed the ODUC1 rate/16 bytes, so the bit width of ODUj of the time division input may be set to n^{∗}16 bytes.

Here, n sets of ODUC1 frame control signal generation circuits are required. It should be specially pointed out that, if n ODUC1 have no special requirements on an output rate, one set of ODUC1 frame control signal generation circuit may be used.

Step 403: the Cm and ∑Cnd generation module statistically obtains a value of Cn of the low-order ODUj data within every period of 20 frames according to a received multi-frame frame header control signal and a rate of a low-order ODUj data stream, and converts the value of Cn into values of Cm and ∑Cnd after internal filtering.

Here, the Cm and ∑Cnd generation module will monitor RAM water lines of various ports, and when a water line is too high or too low, a value of Cn will be adjusted accordingly to stabilize the RAM water line in a centerline section, so that users may read data conveniently. This Cm and ∑Cnd generation module has n^{∗}10 sets of circuits at the same time.

Step 404: it is to generate effective data gap signals of various port time slots from the value of Cm according to a sigma-delta rule, and convert the effective data gap signals into cached read signals; read the low-order ODUj data cached in the partition memories according to that the cached read signals enable the cached data to be read.

Here, when reading RAM, various ports may be addressed. The port numbers of these n ODUj are at most n different ODUj ports and at least 1 ODUj port. That is to say, it is possible to read out one n^{∗}16 bytes of data of n ODUj ports at the same time; or, it is possible to read out n n^{∗}16 bytes of data of one ODUj port at the same time, and these n n^{∗}16 bytes of data are the same. Since data of n time slots need to be read out at the same time, n sets of read addressing circuits are required.

According to the row and column counter output in step 402, a counter slot_cnt of 20 time slots for each ODUC is generated, and a counting range is 0-19; in the 20 time slots of each ODUC, which ODUj to fill in for each time slot may be configured by a CPU, thus completing any placement of time slots from low-order ODUj to high-order ODUC. Here, according to the slot_cnt, the value of Cm and fixed 952, a sigma-delta operation of n^{∗}10-way ODUj services is completed once every 20 time slots. Since slot_cnt can only fill in the data of n time slots per count, according to slot_cnt of each ODUC and a port number of each time slot configured by the CPU, n ODUj port numbers required for each time may be selected, and then sigma-delta operation results may be selected according to the n ODUj port numbers.

The selected n ODUj port numbers and sigma-delta operation results may need one time slot data of n different ODUj ports or n time slot data of one port. This is because one time slot has 16 bytes, then 16 bytes of data for each of n different ports or n^{∗}16 bytes of data for one port will be needed.

Here, the data read out by each partition RAM is n^{∗}16 bytes, and at each count of slot_cnt, data to be filled in for mapping one ODUj service data to ODUCn may be 16 bytes or n^{∗}16 bytes. At this time, remaining data will be stored in the read data, and be stored separately for each ODUj. When slot_cnt counts each time, it is necessary to judge whether the number x of data of ODUj to be mapped is greater than the number of the remaining data, if yes, RAM of this ODUj port is enabled to be read. Herein, x is obtained by counting the same port numbers of the selected n port numbers when slot_cnt counts each time. RAM of up to n ODUj can be enabled to be read.

Step 405: it is to select the required x^{∗}16 bytes of data from the data read from the partition RAM according to the number x (x≤n) of data of ODUj needed to be mapped, and spatially transmit the data to n ODUC framing modules.

Step 406: it is to encod the generated values of Cm and ∑Cnd into Justification Control (JC) signal values according to a protocol, and then send the JC signal values to the ODUC framing module. The Cm and ∑Cnd encoding module has n sets of circuits at the same time.

Step 407: it is to control the time slot data selected in step 405 and the JC signal values encoded in step 406 to be combined into n ODUC1 frames according to a control signal generated by an ODUC frame row and column counter.

At this time, the whole mapping process from n^{∗}10-way low-order ODUj time division data to ODUCn (n=1, 2, 3 ...) is completed. The ODUC framing module has n sets of circuits at the same time. It can be seen that the whole implementation process is relatively simple and flexible. The larger the value of n is, the higher the reflection value of the mapping method of ODUCn is.

It should be noted that the mapping method of ODUCn provided by the embodiment of the present invention supports simultaneous mapping to multiple ODUCns (n = 1, 2, 3 ...), for example, if the total bandwidth of a system is 800G, it may be mapped into 8 ODUC1s; or 1 ODUC1 and 1 ODUC7; or 4 ODUC2s; or 1 ODUC4 and 2 ODUC2s; ......; or 1 ODUC8. It can be seen that the larger the total bandwidth of the system is, the more combinations of mapping low-order ODUj time division data to ODUCn is.

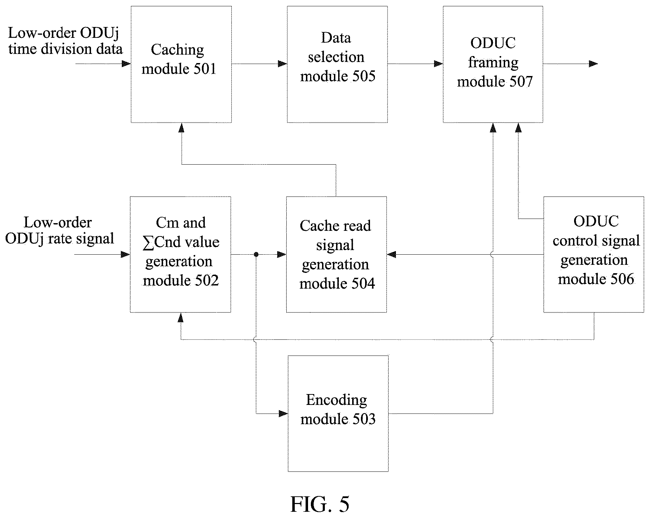

In order to realize the above method, the embodiment of the present invention also provides a mapping apparatus of ODUCn. As shown in FIG. 5, the apparatus includes a caching module 501, a Cm and ∑Cnd value generation module 502, an encoding module 503, a cache read signal generation module 504, a data selection module 505, an ODUC control signal generation module 506, and an ODUC framing module 507.

The caching module 501 is configured to cache low-order ODUj data into n partition memories according to a port time slot configured for each low-order ODUj data.

The Cm and ∑Cnd value generation module 502 is configured to generate values of Cm and ∑Cnd according to a rate of low-order ODUj data stream.

The encoding module 503 is configured to encode the values of Cm and ∑Cnd.

The cache read signal generation module 504 is configured to generate a read signal of cached data by utilizing a modulation algorithm and according to the value of Cm, and read low-order ODUj data cached in the partition memories.

The data selection module 505 is configured to select required time slot data from the read data.

The ODUC control signal generation module 506 is configured to generate an ODUC control signal.

The ODUC framing module 507 is configured to package the selected time slot data and the encoded values of Cm and ∑Cnd into n ODUC1 frames according to the generated ODUC control signal.

Here, the partition memories are partitioned according to different port time slots corresponding to each low-order ODUj; and the partition memories configure dynamically partition sizes occupied by various ports for each low-order ODUj.

The n partition memories simultaneously write the same data in a writing direction and read out x port data in a reading direction, wherein x is less than or equal to n.

The partition memories may use a RAM to store data of the low-order ODUj service, or may use any other memory to store data of the low-order ODUj service. The present invention is not specifically limited herein.

Here, the cache read signal generation module 504 is specifically configured to generate effective data gap signals of various port time slots from the value of Cm according to a sigma-delta rule, and convert the effective data gap signals into cached read signals; read the low-order ODUj data cached in the partition memories according to that the cached read signals enable the cached data to be read.

The data selection module 505 is specifically configured to select the required time slot data according to a port of each time slot in the read cached low-order ODUj data.

In practical application, the caching module 501, the Cm and ∑Cnd value generation module 502, the encoding module 503, the cache read signal generation module 504, the data selection module 505, the ODUC control signal generation module 506, the ODUC framing module 507 may all be implemented by a CPU, a microprocessor unit (MPU), a DSP, or an FPGA located in the mapping apparatus of ODUCn.

According to the embodiment of the present invention, the low-order ODUj data are cached into n partition memories according to the port time slot configured for each low-order ODUj data; values of Cm and ∑Cnd are generated according to the rate of the low-order ODUj data stream, and the values of Cm and ∑Cnd are encoded; the read signal of cached data is generated by utilizing a modulation algorithm and according to the value of Cm, low-order ODUj data cached in the partition memories is read, and required time slot data is selected from the read data; the selected time slot data and the encoded values of Cm and ∑Cnd are packaged into n ODUC1 frames according to the generated ODUC control signal. In this way, mapping from low-order ODUj service data to ODUCn is realized, and the implementation process of the mapping method is simple and has great advantages in logic scale, implementation complexity, and universality. Therefore, the mapping method plays an important role in ensuring reliability of high-rate communication and is helpful for improving commercial application of high-rate optical fiber communication.

The embodiment of the present invention further provides a computer storage medium, storing computer-executable instructions, herein, the computer-executable instructions are used to execute the mapping method of ODUCn.

The skilled in the art should understand that, the embodiment of the present invention can be provided as a method, a system or computer program products. Therefore, a form of hardware embodiment, a form of software embodiment or a form of embodiment combining software aspect and hardware aspect can be used in the present invention. Moreover, a form of computer program product, executed on one or a plurality of computer available storage mediums (including but not limited to a disk memory and an optical memory and so on) which contain computer available program codes, is used in the present invention.

The present invention is described according to the flow diagrams and/or block diagrams of the method, device (system) and computer program product of the embodiments of the present invention. It should be understood that each flow and/or block in the flow diagrams and/or block diagrams and a combination of flows and/or blocks in the flow diagrams and/or block diagrams can be implemented by computer program instructions. These computer program instructions can be provided to a general-purpose computer, a special-purpose computer, an embedded processor or processors of other programmable data processing devices to generate a machine, which makes the instructions executed by the computer or processors of other programmable data processing devices generate a device used for implementing functions specified in one or multiple flows of the flow diagrams and/or in one or multiple blocks of the block diagrams.

These computer program instructions also can be stored in a computer readable storage which can guide the computer or other programmable data processing devices to work in a specific way, which makes the instructions stored in the computer readable storage generate manufactures including an instruction apparatus, and the instruction apparatus implements functions specified in one or multiple flows of the flow diagrams and/or in one or multiple blocks of the block diagrams.

These computer program instructions also can be loaded on the computer or other programmable data processing devices, which makes a series of operation steps be executed on the computer or other programmable devices to generate processing implemented by the computer, thus, the instructions executed by the computer or other programmable devices provide the steps

used for implementing functions specified in one or multiple flows of the flow diagrams and/or in one or multiple blocks of the block diagrams.

The above description is only the preferred embodiment of the present invention and is not intended to limit the protection scope of the present invention. Any modification, equivalent substitution and improvement made within principle of the present invention should be included within the protection scope of the present invention.

### Industrial Applicability

According to the mapping solution of ODUCn provided by the embodiment of the present invention, the low-order ODUj data are cached into n partition memories according to the port time slot configured for each low-order ODUj data; values of Cm and ∑Cnd are generated according to the rate of the low-order ODUj data stream, and the values of Cm and ∑Cnd are encoded; the read signal of cached data is generated by utilizing a modulation algorithm and according to the value of Cm, low-order ODUj data cached in the partition memories is read, and required time slot data is selected from the read data; the selected time slot data and the encoded values of Cm and ∑Cnd are packaged into n ODUC1 frames according to the generated ODUC control signal. In this way, mapping from low-order ODUj service data to ODUCn is realized, and the implementation process of the mapping method is simple and has great advantages in logic scale, implementation complexity, and universality. Therefore, the mapping method plays an important role in ensuring reliability of high-rate communication and is helpful for improving commercial application of high-rate optical fiber communication.

## Claims

1. A mapping method of optical channel data unit Cn, ODUCn, comprising:
caching low-order ODUj data into n partition memories according to a port time slot configured for each low-order ODUj data (301);
generating a value Cm of the number of m-bit data entities and a value ∑Cnd of the number of accumulated remaining bits which cannot form the m-bit data entities according to a rate of low-order ODUj data stream, and encoding the values of Cm and ∑Cnd (302);
generating a read signal of cached data by utilizing a modulation algorithm and according to the value of Cm, reading low-order ODUj data cached in the partition memories, and selecting required time slot data from the read data (303);
packaging the selected time slot data and the encoded values of Cm and ∑Cnd into n ODUC1 frames according to a generated ODUC control signal (304); wherein
the low-order ODUj data is stored in a shared cache manner, and wherein each low-order ODUj is allocated a cache space with a corresponding size according to a bandwidth size of each low-order ODUj.

2. The method according to claim 1, wherein the method further comprises:
partitioning the partition memories according to different port time slots corresponding to each low-order ODUj, and configuring, by the partition memories, dynamically partition sizes occupied by various ports for each low-order ODUj;
the n partition memories simultaneously write the same data in a writing direction and read out x port data in a reading direction, wherein x is less than or equal to n.

3. The method according to claim 1, wherein the generating the read signal of cached data by utilizing the modulation algorithm and according to the value of Cm, reading low-order ODUj data cached in the partition memories, comprises:
generating effective data gap signals of various port time slots from the value of Cm according to an integral-differential sigma-delta rule, and converting the effective data gap signals into cached read signals; reading the low-order ODUj data cached in the partition memories according to that the cached read signals enable the cached data to be read.

4. The method according to claim 1, wherein the selecting required time slot data from the read data, comprises:
selecting the required time slot data according to a port of each time slot in the read cached low-order ODUj data.

5. A mapping apparatus of ODUCn, comprising: a caching module (501), a Cm and ∑Cnd value generation module (502), an encoding module (503), a cache read signal generation module (504), a data selection module (505), an ODUC control signal generation module (506) and an ODUC framing module (507), wherein,
the caching module is configured to cache low-order ODUj data into n partition memories according to a port time slot configured for each low-order ODUj data;
the Cm and ∑Cnd value generation module is configured to generate values of Cm and ∑Cnd according to a rate of low-order ODUj data stream;
the encoding module is configured to encode the values of Cm and ∑Cnd;
the cache read signal generation module is configured to generate a read signal of cached data by utilizing a modulation algorithm and according to the value of Cm, and read low-order ODUj data cached in the partition memories;
the data selection module is configured to select required time slot data from the read data; the ODUC control signal generation module is configured to generate an ODUC control signal;
the ODUC framing module is configured to package the selected time slot data and the encoded values of Cm and ∑Cnd into n ODUC1 frames according to the generated ODUC control signal; wherein the caching module is further configured to store the low-order ODUj data in a shared cache manner, and wherein each low-order ODUj is allocated a cache space with a corresponding size according to a bandwidth size of each low-order ODUj.

6. The apparatus according to claim 5, wherein the caching module is specifically configured as follows: the partition memories are partitioned according to different port time slots corresponding to each low-order ODUj; the partition memories dynamically configure partition sizes occupied by various ports for each low-order ODUj; and
the n partition memories simultaneously write the same data in a writing direction and read out x port data in a reading direction, wherein x is less than or equal to n.

7. The apparatus according to claim 5, wherein the cache read signal generation module is specifically configured to:
generate effective data gap signals of various port time slots from the value of Cm according to a sigma-delta rule, and convert the effective data gap signals into cached read signals; read the low-order ODUj data cached in the partition memories according to that the cached read signals enable the cached data to be read.

8. The apparatus according to claim 5, wherein, the data selection module is specifically configured to:
select the required time slot data according to a port of each time slot in the read cached low-order ODUj data.

9. A computer storage medium storing computer-executable instructions, wherein the computer-executable instructions which, when executed by a computer, cause the computer to execute the mapping method of ODUCn according to any one of claims 1-4.

## Patentansprüche

1. Abbildungsverfahren für optische Kanaldateneinheit Cn (ODUCn), umfassend:
Zwischenspeichern von niederwertigen ODUj-Daten in n Partitionsspeicher gemäß einem Port-Zeitfenster, das für alle niederwertigen ODUj-Daten konfiguriert ist (301);
Generieren eines Werts Cm der Anzahl von m-Bit-Dateninstanzen und eines Werts ∑Cnd der Anzahl von akkumulierten verbleibenden Bits, die keine m-Bit-Dateninstanzen bilden können, gemäß einer Rate eines niederwertigen ODUj-Datenstroms, und Codieren der Werte von Cm und ∑Cnd (302);
Generieren eines Lesesignals der zwischengespeicherten Daten durch Nutzen eines Modulationsalgorithmus und gemäß dem Wert von Cm, Lesen der niederwertigen ODUj-Daten, die in den Partitionsspeichern zwischengespeichert sind, und Auswählen von erforderlichen Zeitfensterdaten aus den gelesenen Daten (303);
Zusammenfassen der ausgewählten Zeitfensterdaten und der codierten Werte von Cm und ∑Cnd zu n ODUC1-Rahmen gemäß einem generierten ODUC-Steuersignal (304); wobei
die niederwertigen ODUj-Daten in einer Weise eines gemeinsam genutzten Zwischenspeichers gespeichert sind, und wobei allen niederwertigen ODUj ein Zwischenspeicherplatz mit einer entsprechenden Größe gemäß einer Bandbreitengröße aller niederwertigen ODUj zugewiesen wird.

2. Verfahren nach Anspruch 1, wobei das Verfahren ferner Folgendes umfasst:
Partitionieren der Partitionsspeicher gemäß unterschiedlichen Port-Zeitfenstern entsprechend allen niederwertigen ODUj und dynamisches Konfigurieren von Partitionsgrößen, die durch verschiedene Ports belegt sind, für alle niederwertigen ODUj durch die Partitionsspeicher;
die n Partitionsspeicher schreiben gleichzeitig die gleichen Daten in einer Schreibrichtung und lesen x Port-Daten in einer Leserichtung aus, wobei x kleiner oder gleich n ist.

3. Verfahren nach Anspruch 1, wobei das Generieren des Lesesignals der zwischengespeicherten Daten durch Nutzen des Modulationsalgorithmus und gemäß dem Wert von Cm, Lesen der niederwertigen ODUj-Daten, die in den Partitionsspeichern zwischengespeichert sind, Folgendes umfasst:
Generieren effektiver Datenlückensignale verschiedener Port-Zeitfenster aus dem Wert von Cm gemäß einer integraldifferentialen Sigma-Delta-Regel und Umwandeln der effektiven Datenlückensignale in zwischengespeicherte Lesesignale; Lesen der niederwertigen ODUj-Daten, die in den Partitionsspeichern zwischengespeichert sind, demgemäß, dass die zwischengespeicherten Lesesignale ermöglichen, dass die zwischengespeicherten Daten gelesen werden.

4. Verfahren nach Anspruch 1, wobei das Auswählen erforderlicher Zeitfensterdaten aus den gelesenen Daten Folgendes umfasst:
Auswählen der erforderlichen Zeitfensterdaten gemäß einem Port jedes Zeitfensters in den gelesenen zwischengespeicherten niederwertigen ODUj-Daten.

5. Abbildungsvorrichtung für ODUCn, umfassend: ein Zwischenspeichermodul (501), ein Cm- und ∑Cnd-Wertgenerierungsmodul (502), ein Codiermodul (503), ein Zwischenspeicherlesesignal-Generierungsmodul (504), ein Datenauswahlmodul (505), ein ODUC-Steuersignal-Generierungsmodul (506) und ein ODUC-Rahmenbildungsmodul (507), wobei
das Zwischenspeichermodul konfiguriert ist zum Zwischenspeichern von niederwertigen ODUj-Daten in n Partitionsspeicher gemäß einem Port-Zeitfenster, das für alle niederwertigen ODUj-Daten konfiguriert ist;
das Cm- und ∑Cnd-Wertgenerierungsmodul konfiguriert ist zum Generieren von Werten von Cm und ∑Cnd gemäß einer Rate eines niederwertigen ODUj-Datenstroms;
das Codiermodul konfiguriert ist zum Codieren der Werte von Cm und ∑Cnd;
das Zwischenspeicherlesesignal-Generierungsmodul konfiguriert ist zum Generieren eines Lesesignals von zwischengespeicherten Daten durch Nutzen eines Modulationsalgorithmus und gemäß dem Wert von Cm und Lesen von niederwertigen ODUj-Daten, die in den Partitionsspeichern zwischengespeichert sind;
das Datenauswahlmodul konfiguriert ist zum Auswählen erforderlicher Zeitfensterdaten aus den gelesenen Daten;
das ODUC-Steuersignal-Generierungsmodul konfiguriert ist zum Generieren eines ODUC-Steuersignals;
das ODUC-Rahmenbildungsmodul konfiguriert ist zum Zusammenfassen der ausgewählten Zeitfensterdaten und der codierten Werte von Cm und ∑Cnd zu n ODUC1-Rahmen gemäß dem generierten ODUC-Steuersignal; wobei das Zwischenspeichermodul ferner dazu konfiguriert ist, die niederwertigen ODUj-Daten in einer Weise eines gemeinsam genutzten Zwischenspeichers zu speichern, und wobei allen niederwertigen ODUj ein Zwischenspeicherplatz mit einer entsprechenden Größe gemäß einer Bandbreitengröße aller niederwertigen ODUj zugewiesen ist.

6. Vorrichtung nach Anspruch 5, wobei das Zwischenspeichermodul insbesondere wie folgt konfiguriert ist: die Partitionsspeicher sind gemäß unterschiedlichen Port-Zeitfenstern entsprechend allen niederwertigen ODUj partitioniert; die Partitionsspeicher konfigurieren dynamisch Partitionsgrößen, die durch verschiedene Ports belegt sind, für alle niederwertigen ODUj; und
die n Partitionsspeicher schreiben gleichzeitig die gleichen Daten in einer Schreibrichtung und lesen x Port-Daten in einer Leserichtung aus, wobei x kleiner oder gleich n ist.

7. Vorrichtung nach Anspruch 5, wobei das Zwischenspeicherlesesignal-Generierungsmodul insbesondere zu Folgendem konfiguriert ist:
Generieren effektiver Datenlückensignale verschiedener Port-Zeitfenster aus dem Wert von Cm gemäß einer Sigma-Delta-Regel und Umwandeln der effektiven Datenlückensignale in zwischengespeicherte Lesesignale; Lesen der niederwertigen ODUj-Daten, die in Partitionsspeichern zwischengespeichert sind, demgemäß, dass die zwischengespeicherten Lesesignale ermöglichen, dass die zwischengespeicherten Daten gelesen werden.

8. Vorrichtung nach Anspruch 5, wobei das Datenauswahlmodul insbesondere zu Folgendem konfiguriert ist:
Auswählen der erforderlichen Zeitfensterdaten gemäß einem Port jedes Zeitfensters in den gelesenen zwischengespeicherten niederwertigen ODUj-Daten.

9. Computerspeichermedium, das computerausführbare Anweisungen speichert, wobei die computerausführbaren Anweisungen bei Ausführung durch einen Computer den Computer dazu veranlassen, das Abbildungsverfahren für ODUCn gemäß einem der Ansprüche 1-4 auszuführen.

## Revendications

1. Procédé de mappage de Cn d'unité de données de canal optique, ODUCn, comprenant :
la mise en cache de données ODUj de poids faible dans n mémoires de partition en fonction d'un intervalle de temps de port conçu pour chaque donnée ODUj de poids faible (301) ;
la génération d'une valeur Cm du nombre d'entités de données à m bits et d'une valeur ∑Cnd du nombre de bits restants accumulés qui ne peuvent pas former les entités de données à m bits en fonction d'un débit de flux de données ODUj de poids faible, et le codage des valeurs Cm et ∑Cnd (302) ;
la génération d'un signal de lecture de données mises en cache en utilisant un algorithme de modulation et en fonction de la valeur Cm, la lecture des données ODUj de poids faible mises en cache dans les mémoires de partition, et la sélection des données d'intervalle de temps requises à partir des données de lecture (303) ;
la combinaison des données d'intervalle de temps sélectionnées et des valeurs codées Cm et ∑Cnd en n trames ODUC1 en fonction d'un signal de commande ODUC généré (304) ; dans lequel
les données ODUj de poids faible sont stockées d'une manière mise en cache partagée, et dans lequel chaque ODUj de poids faible se voit attribuer un espace de cache avec une taille correspondante en fonction d'une taille de bande passante de chaque ODUj de poids faible.

2. Procédé selon la revendication 1, dans lequel le procédé comprend en outre :
le partitionnement des mémoires de partition en fonction de différents intervalles de temps de port correspondant à chaque ODUj de poids faible, et la configuration, par les mémoires de partition, de manière dynamique, des tailles de partition occupées par divers ports pour chaque ODUj de poids faible ;
les n mémoires de partition écrivent simultanément les mêmes données dans un sens d'écriture et lisent x données de port dans un sens de lecture, dans lequel x est inférieur ou égal à n.

3. Procédé selon la revendication 1, dans lequel la génération du signal de lecture de données mises en cache en utilisant l'algorithme de modulation et en fonction de la valeur Cm, la lecture des données ODUj de poids faible mises en cache dans les mémoires de partition, comprend :
la génération de signaux de lacunes de données effectifs de divers intervalles de temps de port à partir de la valeur Cm en fonction d'une règle sigma-delta intégrale-différentielle, et la conversion des signaux de lacunes de données effectifs en signaux de lecture mis en cache ; la lecture des données ODUj de poids faible mises en cache dans les mémoires de partition selon que les signaux de lecture mis en cache permettent de lire les données mises en cache.

4. Procédé selon la revendication 1, dans lequel la sélection des données d'intervalle de temps requises à partir des données de lecture comprend :
la sélection des données d'intervalle de temps requises en fonction d'un port de chaque intervalle de temps dans les données ODUj de poids faible mises en cache lues.

5. Appareil de mappage d'ODUCn, comprenant : un module de mise en cache (501), un module de génération de valeurs Cm et ∑Cnd (502), un module de codage (503), un module de génération de signal de lecture mis en cache (504), un module de sélection de données (505), un module de génération de signal de commande ODUC (506) et un module de tramage ODUC (507), dans lequel,
le module de mise en cache est conçu pour mettre en cache les données ODUj de poids faible dans n mémoires de partition en fonction d'un intervalle de temps de port conçu pour chaque donnée ODUj de poids faible ;
le module de génération de valeurs Cm et ∑Cnd est conçu pour générer des valeurs Cm et ∑Cnd en fonction d'un débit de flux de données ODUj de poids faible ;
le module de codage est conçu pour coder les valeurs Cm et ∑Cnd ;
le module de génération de signal de lecture mis en cache est conçu pour générer un signal de lecture de données mises en cache en utilisant un algorithme de modulation et en fonction de la valeur Cm, et lire les données ODUj de poids faible mises en cache dans les mémoires de partition ;
le module de sélection de données est conçu pour sélectionner des données d'intervalle de temps requises à partir des données de lecture ;
le module de génération de signal de commande ODUC est conçu pour générer un signal de commande ODUC ;
le module de tramage ODUC est conçu pour combiner les données d'intervalle de temps sélectionnées et les valeurs codées Cm et ∑Cnd en n trames ODUC1 en fonction d'un signal de commande ODUC généré ; dans lequel le module de mise en cache est en outre conçu pour
stocker les données ODUj de poids faible d'une manière mise en cache partagée, et dans lequel
chaque ODUj de poids faible se voit attribuer un espace de cache avec une taille correspondante en fonction d'une taille de bande passante de chaque ODUj de poids faible.

6. Appareil selon la revendication 5, dans lequel le module de mise en cache est conçu spécialement comme suit : les mémoires de partition sont partitionnées en fonction de différents intervalles de temps de port correspondant à chaque ODUj de poids faible ; les mémoires de partition configurent de manière dynamique les tailles de partition occupées par divers ports pour chaque ODUj de poids faible ; et
les n mémoires de partition écrivent simultanément les mêmes données dans un sens d'écriture et lisent x données de port dans un sens de lecture, dans lequel x est inférieur ou égal à n.

7. Appareil selon la revendication 5, dans lequel le module de génération de signal de lecture mis en cache est conçu spécialement pour :
générer des signaux de lacunes de données effectifs de divers intervalles de temps de port à partir de la valeur Cm en fonction d'une règle sigma-delta, et convertir les signaux de lacunes de données effectifs en signaux de lecture mis en cache ; lire les données ODUj de poids faible mises en cache dans les mémoires de partition selon que les signaux de lecture mis en cache permettent de lire les données mises en cache.

8. Appareil selon la revendication 5, dans lequel le module de sélection de données est conçu spécialement pour :
sélectionner les données d'intervalle de temps requises en fonction d'un port de chaque intervalle de temps dans les données ODUj de poids faible mises en cache lues.

9. Support de stockage informatique stockant des instructions exécutables par ordinateur, dans lequel les instructions exécutables par ordinateur, lorsqu'elles sont exécutées par un ordinateur, amènent l'ordinateur à exécuter le procédé de mappage d'ODUCn selon l'une quelconque des revendications 1 à 4.
